# EUROPÄISCHE PATENTSCHRIFT

(11) **EP 2 269 416 B1**
(45) Veröffentlichungstag und Bekanntmachung des Hinweises auf die Patenterteilung: **12.10.2011**
(21) Anmeldenummer: 09738010.9
(22) Anmeldetag: 17.04.2009
(51) Int. Cl.: H04W 72/10, H04W 84/14

(54) **Netzknoten und Verfahren zur Datenübertragung in einem drahtlosen Multihop-Netzwerk**
Network node and method for data transmission in a wireless multi-hop network
Noeud de réseau et procédé de transmission de données dans un réseau sans fil à bonds multiples

(30) Priorität: 29.04.2008 DE 102008021361
(43) Veröffentlichungstag der Anmeldung: 05.01.2011
(73) Patentinhaber: Siemens Aktiengesellschaft, 80333 München (DE)
(72) Erfinder: DE PELLEGRINI, Francesco, I-38100 Trento (IT); TACCONI, David, I-38100 Trento(TN) (IT); WALEWSKI, Joachim, 82008 Unterhaching (DE); FINKENZELLER, Michael, 81373 München (DE); RIEDL, Johannes, 84030 Ergolding (DE); RANDEL, Sebastian, 81547 München (DE)
(86) Internationale Anmeldenummer: PCT/EP2009/054571
(87) Internationale Veröffentlichungsnummer: WO 2009/132966

(56) Entgegenhaltungen:
- EP-A- 1 748 601
- US-A1- 2002 181 434

## Beschreibung

Die Erfindung liegt auf dem technischen Gebiet der Nachrichtennetzwerke und betrifft ein Verfahren zur Übertragung von Daten in einem drahtlosen Multihop-Netzwerk.

Unter Dienstgüte (QoS = Quality of Service) wird die Gesamtheit aller Qualitätsmerkmale eines Nachrichtennetzwerks aus Nutzersicht verstanden. Sie kann insbesondere durch die Kenngrößen Jitter, Latenz, Verlustrate und Datendurchsatz (Datenübertragungsrate bzw. verfügbare Bandbreite) ausgedrückt werden. Obgleich die Einhaltung zugesicherter Dienstgütemerkmale in einem Nachrichtennetzwerk nicht immer kritisch ist, ist sie für eine bestimmte Art Datenverkehr von wesentlicher Bedeutung, nämlich beispielsweise für Echtzeit-Daten, wie Video- und Audiodaten, Internettelefonie (VoIP = Voice over IP) und Steuersignale in einer Prozessablaufsteuerung.

In den letzten Jahren hat die Popularität drahtloser Nachrichtennetzwerke erheblich zugenommen, wobei wesentlichen Anteil hieran die Anbindung tragbarer Computer an das Internet hat. Funknetzwerke nach dem WLAN-Standard (WLAN = Wireless Local Area Network) IEEE 802.11 gehören mittlerweile zu den am häufigsten eingesetzten Technologien in der drahtlosen Datenübertragung.

In Funknetzwerken (z. B. Ad-Hoc-Netzwerke) können die Netzknoten unmittelbar miteinander kommunizieren, wobei für den Fall, dass sich zwei Netzknoten außerhalb ihrer Funkreichweite befinden, andere Netzknoten zur Weiterleitung von Daten eingesetzt werden. Diese Form der Datenübertragung wird als Multihopping (Mehrfachsprungverfahren) bezeichnet.

In Funknetzwerken ist die Einhaltung zugesicherter Dienstgütemerkmale aufgrund einer systemimmanenten Fehleranfälligkeit besonders schwierig. Wird zur Datenübertragung zwischen mehreren Netzknoten ein einziger Übertragungskanal verwendet, können Probleme auftreten, die den tatsächlichen Datendurchsatz gegenüber der theoretisch verfügbaren Bandbreite erheblich verringern können. Ein in der Praxis wichtiges Beispiel hierfür ist eine als "Hidden-Node-Problem" bekannte Situation, bei der sich ein erster und zweiter Netzknoten außerhalb ihrer Funkreichweite, jedoch in Funkreichweite zu einem dritten Netzknoten befinden. Senden der erste und zweite Netzknoten zufällig zur gleichen Zeit Datenpakete an den dritten Netzknoten kann dies vom ersten und zweiten Netzknoten nicht erkannt werden kann, da sie sich außerhalb ihrer gegenseitigen Funkreichweite befinden. Da der dritte Netzknoten von den beiden anderen Netzknoten aber nicht gleichzeitig Daten über denselben Übertragungskanal empfangen kann, kann eine Datenkollision auftreten, bei der ein Verlust von Datenpaketen möglich ist. Um etwaigen Datenverlust auszugleichen, sind weitere Datenübertragungen erforderlich, welche die verfügbaren Ressourcen in unnötiger Weise belasten.

In vielen Anwendungen ist es erforderlich, dass vorrangig zu übertragende ("priorisierte") Daten, beispielsweise Echtzeit-Daten, zusammen mit nicht-priorisierten Daten ("Best-Effort-Daten") im Netzwerk übertragen werden. In diesem Fall kann eine besonders nachteilige Situation eintreten, dass durch die Hidden-Node-Problematik eine Übertragung der priorisierten Daten durch die nicht-priorisierten Daten gestört wird.

Aus diesem Grund sind in letzten Jahren verstärkt Bemühungen unternommen worden, insbesondere für drahtlose Funknetzwerke den Standard IEEE 802.11 im Hinblick auf die Dienstgüte zu verbessern, was in der Erweiterung IEEE 802.11e erfolgt ist. Im Grunde soll durch den erweiterten Standard IEEE 802.11e verhindert werden, dass nicht-priorisierter Datenverkehr priorisierten Datenverkehr stört. Als wesentliches Element zur Unterstützung der Dienstgüte wurde eine zentral koordinierende Instanz (HC = Hybrid Coordinator) geschaffen, durch welche zwei Zugriffsmethoden (EDCF = Enhanced Distributed Coordination Function und kontrollierter Kanalzugriff) auf das Übertragungsmedium unterstützt werden. HC benutzt hierbei vier Zugriffskategorien (AC = Access Category) und acht Datenpuffer (TS = Traffic Stream) auf der MAC-Schicht (MAC = Medium Access Control). Die übertragenen Datenpakete werden mit einem Prioritätsparameter (TID = Traffic Priority) versehen, der Werte zwischen 0 und 15 annehmen kann, wobei Datenpakete mit einem TID von 0 bis 7 auf die AC abgebildet und danach per EDCF versandt werden, und Datenpakete mit einem TID zwischen 8 und 15 auf die TS abgebildet und dann mittels kontrolliertem Kanalzugriff verschickt werden. Weitere Merkmale zur Verbesserung der Dienstgüte sind unter anderem ein Konzept zur Zuweisung von Zeitintervallen (TXOP = Transmission Opportunity), wobei ein Netzknoten nur in den zugewiesenen Zeitintervallen senden darf, und die Möglichkeit Gruppenbestätigungsmeldungen (Block-ACK = Block Acknowledgement) zu senden, wobei eine Gruppe von Datenpaketen übertragen wird und der Empfänger pro Gruppe nur ein einziges Block-ACK an den Sender übermittelt.

Nachteilig bei den im erweiterten Standard IEEE 802.11e eingeführten Möglichkeiten zur Verbesserung der Dienstgüte ist vor allem die Tatsache, dass nicht-priorisierter Datenverkehr gänzlich zum Erliegen gebracht werden kann, wodurch die Performance des Netzwerks beim gemeinsamen Übertragen von priorisierten Daten und nicht-priorisierten Daten erheblich leidet.

Als Alternative hierzu wäre denkbar, zum Zwecke einer Erhöhung der Dienstgüte für priorisierte Daten die Datenübertragungsrate zu erhöhen, was sich jedoch in vielen Fällen verbietet oder mit der eingesetzten Technologie nicht realisierbar ist.

Das Dokument US 2002/0181434 A1 offenbart ein Verfahren zur drahtlosen Datenübertragung, bei dem ein reiner Kontrollkanal zur Koordination der Datenübertragung auf Datenkanälen eingesetzt wird.

Demgegenüber liegt der vorliegenden Erfindung die Aufgabe zugrunde, ein Verfahren zur Übertragung von Daten in einem drahtlosen Multihop-Netzwerk zur Verfügung zu stellen, das gegenüber den herkömmlichen Verfahren eine Verbesserung der Performance beim gemeinsamen Übertragen von priorisierten Daten und nicht-priorisierten Daten ermöglicht.

Diese und weitere Aufgaben werden nach dem Vorschlag der Erfindung durch ein Verfahren zur Übertragung von Daten in einem drahtlosen Multihop-Netzwerk mit den Merkmalen von Anspruch 1 gelöst. Vorteilhafte Ausgestaltungen der Erfindung sind durch die Merkmale der Unteransprüche angegeben.

Erfindungsgemäß ist ein Verfahren zur Übertragung von Daten in einem von einem Netzwerkmanagement gesteuerten drahtlosen Multihop-Netzwerk mit einer Mehrzahl maschenartig miteinander verbundener Netzknoten gezeigt. In dem Multihop-Netzwerk können Daten zwischen den Netzknoten über eine Mehrzahl (wenigstens drei) verschiedene Übertragungskanäle übertragen werden. Das im Netzwerk eingerichtete Netzwerkmanagement zur Steuerung der Datenübertragung umfasst entweder eine zentrale Steuereinrichtung oder (in der Regel) eine Mehrzahl jeweils den Netzknoten zugeordnete dezentrale Steuereinrichtungen.

In dem Multihop-Netzwerk können die zu übertragenden Daten in Steuerdaten zur Steuerung der Datenübertragung, insbesondere zur Signalisierung eines für die Datenübertragung zu nutzenden Übertragungskanals zwischen zwei Netzknoten, und Nutzdaten unterteilt werden. Nutzdaten können, beispielsweise durch Zuweisen eines entsprechenden Prioritätsparameters, priorisiert werden, das heißt, sie können als vorrangig zu übertragende Nutzdaten gekennzeichnet werden. Nutzdaten können in priorisierte Nutzdaten und nicht-priorisierte Nutzdaten unterteilt werden.

Durch das Netzwerkmanagement wird eine Datenübertragung zwischen Netzknoten des Multihop-Netzwerks gesteuert. Dies umfasst insbesondere das Einrichten eines Verbindungspfads zwischen Netzknoten, was beispielsweise auf Basis von Routing-Tabellen in den Netzknoten erfolgen kann. Für eine Datenübertragung kann auf herkömmliche Routing- bzw. Übertragungsprotokolle zurückgegriffen werden, welche dem Fachmann als solche wohlbekannt sind und hier nicht näher erläutert werden müssen. Beispielsweise kann die Datenübertragung auf dem WLAN-Standard IEEE 802.11 bzw. Ergänzungen dieses Standards basieren.

Wesentlich ist, dass in dem erfindungsgemäßen Verfahren, das durch das Netzwerkmanagement ausgeführt wird, ein einziger Übertragungskanal als Steuerkanal für eine Übertragung von Steuerdaten reserviert und Steuerdaten zwischen den Netzknoten ausschließlich über den Steuerkanal übertragen werden. Alle Netzknoten des Netzes benutzen somit einen selben Übertragungskanal als Steuerkanal.

Wesentlich ist weiterhin, dass (für den Fall, dass priorisierte Nutzdaten im Netzwerk übertragen werden sollen) wenigstens ein vom Steuerkanal verschiedener Übertragungskanal als Prioritätskanal für eine Übertragung der priorisierten Nutzdaten zwischen Netzknoten eines Verbindungspfads reserviert wird und die priorisierte Nutzdaten nur über den wenigstens einen Prioritätskanal auf dem Verbindungspfad übertragen werden.

Wesentlich ist darüber hinaus, dass (für den Fall, dass priorisierte Nutzdaten im Netzwerk übertragen werden sollen) wenigstens ein vom Steuerkanal und zugleich vom wenigstens einen Prioritätskanal verschiedener Übertragungskanal als Nicht-Prioritätskanal für eine Übertragung von nicht-priorisierten Nutzdaten zwischen einem jedem Netzknoten des Verbindungspfads und den zu diesem Netzknoten (des Verbindungspfads) jeweils benachbarten Nachbar-Netzknoten, sowie zwischen den Nachbar-Netzknoten untereinander, reserviert wird und nicht-priorisierte Nutzdaten nur über den wenigstens einen Nicht-Prioritätskanal übertragen werden.

Als Nachbar-Netzknoten im Sinne der Erfindung werden jene Netzknoten angesehen, die sich in Funkreichweite zu einem Netzknoten befinden und durch einen einzigen Sprung (1-Hop) erreichbar sind. Nachbar-Netzknoten können somit unmittelbar miteinander kommunizieren (ohne Zwischenschaltung weiterer Netzknoten).

Das erfindungsgemäße Verfahren ermöglicht erstmals eine gemeinsame Übertragung priorisierter und nicht-priorisierter Nutzdaten in einem drahtlosen Multihop-Netzwerk, bei der einerseits sichergestellt werden kann, dass eine Übertragung priorisierter Daten aufgrund der Zuweisung wenigstens einen reservierten Übertragungskanals nicht gestört wird, und andererseits die Übertragung nicht-priorisierter Daten nicht zum Erliegen gebracht wird, so dass im Vergleich zu herkömmlichen Verfahren eine bessere Performance des Funknetzwerks ermöglicht ist.

In dem erfindungsgemäßen Verfahren kann eine Übertragung von priorisierten Nutzdaten für verschiedene Paare einander benachbarter Netzknoten des Verbindungspfads über einen jeweils gleichen Übertragungskanal als Prioritätskanal erfolgen, was den Vorteil einer besonders einfachen technischen Realisierung bietet. Alternativ hierzu kann eine Übertragung von priorisierten Nutzdaten für verschiedene Paare einander benachbarter Netzknoten des Verbindungspfads über voneinander verschiedene Übertragungskanäle erfolgen, was den Vorteil bietet, dass die Wahl eines Prioritätskanals beispielsweise auf Basis der momentan verfügbaren Ressourcen eines Übertragungskanals erfolgen kann.

Bei einer weiteren Ausgestaltung des erfindungsgemäßen Verfahrens werden der wenigstens eine Prioritätskanal und der wenigstens eine Nicht-Prioritätskanal gemäß einer festlegbaren Reihenfolge für die Übertragungskanäle aus den vom Steuerkanal verschiedenen Übertragungskanälen gewählt. Diese Vorgehensweise ermöglicht eine besonders einfache technische Realisierung der Wahl von Prioritäts- und Nicht-Prioritätskanal.

Bei einer hierzu alternativen Ausgestaltung des erfindungsgemäßen Verfahrens werden der wenigstens eine Prioritätskanal und der wenigstens eine Nicht-Prioritätskanal gemäß einer Auswahlregel für Werte wenigstens einer messbaren (gegebenenfalls a priori festgelegten) Kenngröße für die Übertragungskanäle gewählt. Diese Vorgehensweise ermöglicht in besonders vorteilhafter Weise eine an die im Netzwerk verfügbaren Ressourcen angepasste Nutzung von Übertragungskanälen.

Bei eine weiteren Ausgestaltung des erfindungsgemäßen Verfahrens wird vom Netzwerkmanagement ein Kollisionsvermeidungsprotokoll zur Vermeidung von Datenkollisionen ausgeführt, so dass nicht-priorisierter Datenverkehr kollisionsfrei übertragen werden kann.

Die Erfindung erstreckt sich weiterhin auf einen Netzknoten eines drahtlosen Multihop-Netzwerks, welcher mit einer Steuereinrichtung zur Steuerung der Datenübertragung ausgerüstet ist, in der ein Programmcode eingerichtet ist, welcher Steuerbefehle enthält, die die Steuereinrichtung zur Durchführung eines wie oben beschriebenen Verfahrens veranlassen.

Weiterhin erstreckt sich die Erfindung auf einen maschinenlesbaren Programmcode für eine Steuereinrichtung eines Netzknotens zur Steuerung der Datenübertragung, welcher Steuerbefehle enthält, die die Steuereinrichtung zur Durchführung eines wie oben beschriebenen Verfahrens veranlassen.

Darüber hinaus erstreckt sich die Erfindung auf ein Speichermedium mit einem darauf gespeicherten maschinenlesbaren Programmcode, wie er oben beschrieben wurde.

Die Erfindung wird nun anhand eines Ausführungsbeispiels näher erläutert, wobei Bezug auf die beigefügten Figuren genommen wird. Gleiche bzw. gleich wirkende Elemente sind in den Figuren mit gleichen Bezugszahlen bezeichnet. Es zeigen
- Fig. 1: eine schematische Darstellung eines drahtlosen Multihop-Netzwerks zur Veranschaulichung eines Aus- führungsbeispiels des erfindungsgemäßen Verfahrens;
- Fig. 2: eine weitere schematische Darstellung des drahtlo- sen Multihop-Netzwerks von Fig. 1;
- Fig. 3: eine weitere schematische Darstellung des drahtlo- sen Multihop-Netzwerks von Fig. 1.

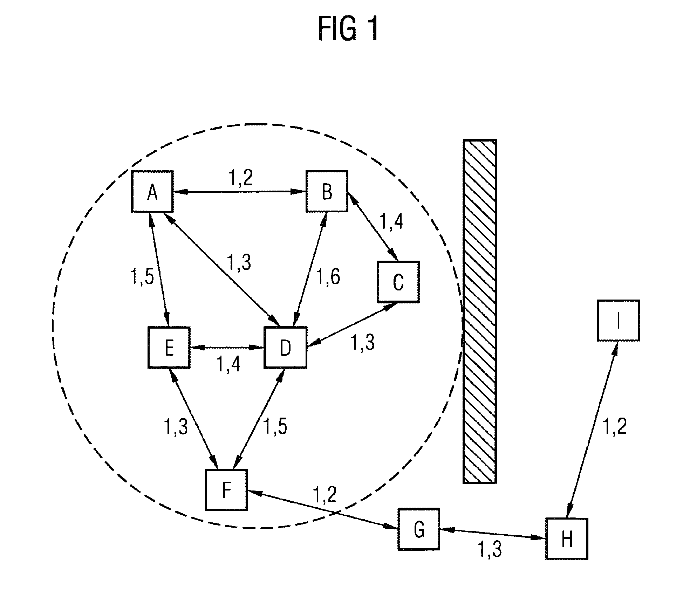

Das in den Figuren 1 bis 3 dargestellte, drahtlose (Ad-Hoc-)Multihop-Netzwerk umfasst neun maschenartig miteinander verbundene Netzknoten A-I, die über sechs verschiedene Übertragungskanäle 1-6 Daten untereinander austauschen können. Die Netzknoten A-I können jeweils mit Nachbar-Netzknoten über Datenlinks, die in Form von Doppelpfeilen symbolisch dargestellt sind, Daten im Duplex-Verfahren austauschen.

Zum Zwecke der Datenübertragung zwischen den Netzknoten A-I ist in den Netzknoten A-I ein Netzwerkmanagement zur Steuerung der Datenübertragung eingerichtet, das hier beispielsweise auf dem WLAN-Standard IEEE 802.11 bzw. dessen später eingeführte Ergänzungen basieren kann. Falls Daten zwischen Netzknoten übertragen werden sollen, die sich außerhalb ihrer gegenseitigen Funkreichweite befinden, wird ein mehrere Datenlinks enthaltender (Ende-zu-Ende-)Verbindungspfad zwischen den Netzknoten eingerichtet, in dem andere Netzknoten als Zwischenknoten zur Weiterleitung eingesetzt werden (Multihopping). In Fig. 1 ist durch den Balken ein für Funkwellen undurchlässiges Hindernis, beispielsweise eine Wand, schematisch dargestellt.

In dem in den Figuren 1 bis 3 beispielhaft dargestellten Multi-Hop-Netzwerk ist das Netzwerkmanagement so eingerichtet, dass der Übertragungskanal 1 als Steuerkanal ausschließlich für eine Übertragung von Steuersignalen zwischen benachbarten Netzknoten eingesetzt wird, die insbesondere einer Signalisierung (Einrichtung) eines oder mehrerer Übertragungskanäle zur Übertragung von priorisierten oder nicht-priorisierten Nutzdaten über einen Datenlink bzw. Verbindungspfad dienen. Über den Steuerkanal werden keine priorisierten oder nicht-priorisierten Nutzdaten übertragen.

Im Multihop-Netzwerk zu übertragende Datenpakete (z. B. Echtzeit-Daten) können beispielsweise mittels eines Prioritätsparameters für eine vorrangige Übertragung gegenüber in herkömmlicher Weise mittels "Best-Effort" übertragene (nicht-priorisierte) Nutzdaten priorisiert werden.

In Fig. 1 ist eine beispielhafte Situation im Multihop-Netzwerk dargestellt, in der lediglich Steuerdaten und nicht-priorisierte Nutzdaten übertragen werden. Die Netzknoten A-I nutzen für die Übertragung der nicht-priorisierten Nutzdaten die für die Nutzdatenübertragung reservierten Übertragungskanäle 2-5, wobei - gesteuert durch das Netzwerkmanagement - zwischen einander benachbarten Netzknoten der Übertragungskanal mit der momentan größten verfügbaren Datenübertragungsrate zur Datenübertragung eingesetzt wird. So wird beispielsweise zwischen den beiden benachbarten Netzknoten A und B, neben dem Steuerkanal 1 zur Übertragung von Steuerdaten, der Übertragungskanal 2 zur Nutzdatenübertragung eingesetzt. Zwischen den beiden Netzknoten A und E wird, neben dem Steuerkanal 1 zur Übertragung von Steuerdaten, der Übertragungskanal 5 für eine Nutzdatenübertragung eingesetzt.

Im gezeigten Beispiel reicht die Funkreichweite eines jeden Netzknotens wenigstens bis zum Nachbar-Netzknoten, so dass jeder Netzknoten mit seinen (unmittelbar) benachbarten Netzknoten direkt kommunizieren kann. In Fig. 1 ist beispielhaft die Funkreichweite des Netzknotens D durch eine gestrichelte Linie angegeben.

Betrachtet man sich den Nutzdatenverkehr zwischen den beiden zueinander benachbarten Netzknoten D und A, welcher auf dem Übertragungskanal 3 abgewickelt wird, wird erkennbar, dass in Funkreichweite des Netzknotens D gleichzeitig zwischen zwei weiteren Netzknotenpaaren Nutzdatenverkehr auf dem Übertragungskanal 3 abgewickelt wird, nämlich zwischen dem Netzknotenpaar D und C und zwischen dem Netzknotenpaar E und F.

Es sei nun angenommen, dass im Multihop-Netzwerk priorisierte Nutzdaten zwischen den beiden Netzknoten A und D übertragen werden sollen. In diesem Fall signalisiert beispielsweise Netzknoten A an Netzknoten D, dass der Übertragungskanal 2 als Prioritätskanal zur ausschließlichen Übertragung priorisierter Nutzdaten reserviert werden soll, wobei eine solche Auswahl beispielsweise auf Basis der momentan auf den Übertragungskanälen 2-5 verfügbaren Bandbreite erfolgen kann und der Übertragungskanal mit der höchsten verfügbaren Bandbreite zur Übertragung der priorisierten Nutzdaten ausgewählt wird. Eine Signalisierung (Einrichtung) von Übertragungskanal 2 als Prioritätskanal erfolgt über den Steuerkanal 1, wobei zwischen den beiden Netzknoten A und D entsprechende Steuersignale über den Steuerkanal 1 ausgetauscht werden.

Im Anschluss hieran werden Steuersignale, welche andere Netzknoten darüber informieren, dass der Übertragungskanal 2 zwischen den beiden Netzknoten A und D als Prioritätskanal zur Übertragung von priorisierten Nutzdaten reserviert wurde, vom Netzknoten A über den Steuerkanal 1 an die in Funkreichweite befindlichen Nachbar-Netzknoten von Netzknoten A und vom Netzknoten D über den Steuerkanal 1 an die in Funkreichweite befindlichen Nachbar-Netzknoten von Netzknoten D übertragen.

Dies hat zur Folge, dass alle Nachbar-Netzknoten von Netzknoten D und alle Nachbar-Netzknoten von Netzknoten A prüfen, ob sie den (als Prioritätskanal reservierten) Übertragungskanal 2 für eine Übertragung von nicht-priorisierten Nutzdaten zwischen sich und den Netzknoten A bzw. D sowie zwischen sich und anderen Nachbar-Netzknoten der Netzknoten A und D benutzen. Falls dies der Fall ist, wird die Übertragung von nicht-priorisierten Nutzdaten über den Übertragungskanal 2 beendet und auf einem von Übertragungskanal 1 und 2 verschiedenen Übertragungskanal fortgesetzt. Die Wahl eines neuen Übertragungskanals zur Übertragung von nicht-priorisierten Nutzdaten kann beispielsweise auf Basis einer momentan verfügbaren Bandbreite erfolgen.

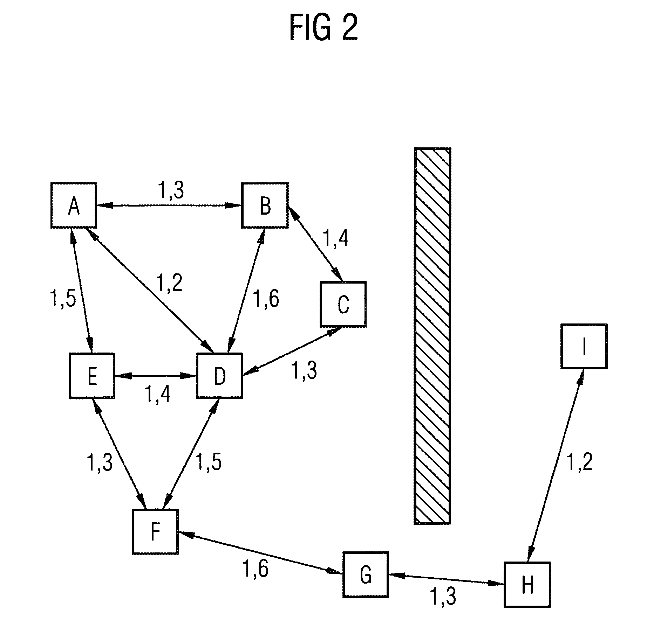

Dies führt in Folge zu einem Szenario, wie es beispielhaft in Fig. 2 gezeigt ist. In Fig. 2 ist nun zwischen den beiden Netzknoten A und D der Übertragungskanal 2 als Prioritätskanal zur Übertragung von priorisierten Nutzdaten eingerichtet. Die beiden Netzknoten A und B, welche bislang eine Übertragung nicht-priorisierter Nutzdaten auf dem Übertragungskanal 2 durchgeführt haben, führen dies nun auf dem Übertragungskanal 3 fort. In gleicher Weise führen die beiden Netzknoten F und G, welche bislang eine Übertragung nicht-priorisierter Nutzdaten auf dem Übertragungskanal 2 durchgeführt haben, eine Übertragung nicht-priorisierter Nutzdaten auf dem Übertragungskanal 6 durch. Kein in Funkreichweite von Netzknoten D und Netzknoten A befindlicher Nachbar-Netzknoten wickelt nunmehr nicht-priorisierten Datenverkehr auf dem Übertragungskanal 2 ab.

Zwischen den beiden Netzknoten A und D können somit priorisierte Daten auf dem hierfür reservierten Übertragungskanal 2 übertragen werden. Nicht-priorisierte Daten werden über den Übertragungskanal 2 nicht übertragen, weder zwischen den beiden Netzknoten A und D, noch zwischen dem Netzknoten D und zu diesem in Funkreichweite befindlichen Nachbar-Netzknoten, noch zwischen dem Netzknoten A und in Funkreichweite zu diesem befindlichen Nachbar-Netzknoten, noch zwischen anderen Netzknoten-Paaren, die Nachbar-Netzknoten zu Netzknoten D und Netzknoten A sind. Auf diese Weise kann eine störungsfreie Übertragung priorisierter Nutzdaten zwischen den Netzknoten A und D sichergestellt werden, wobei nicht-priorisierte Nutzdaten gleichermaßen über die Übertragungskanäle 3-6 übertragen werden können.

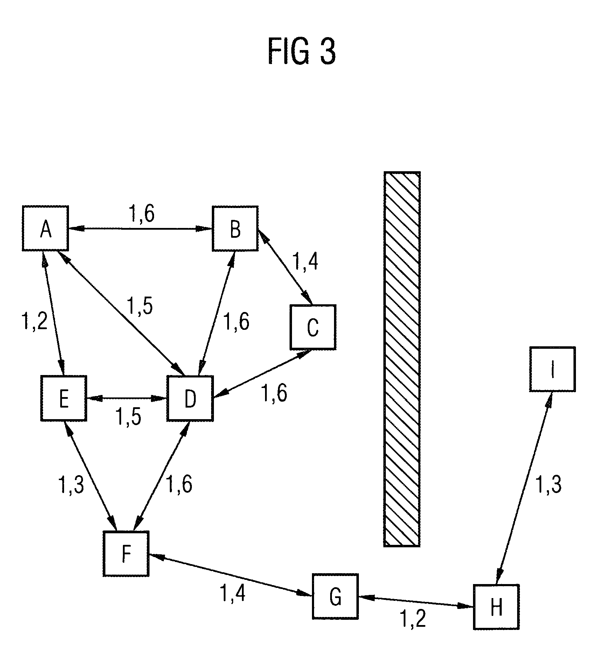

In Fig. 3 ist eine Situation dargestellt, in der, ausgehend von einem Szenario wie es in Fig. 1 gezeigt ist, priorisierte Nutzdaten durch Multihopping zwischen den Netzknoten A und I unter Zwischenschaltung der Netzknoten E, F, G und H übertragen werden sollen. Zu diesem Zweck richtet das Netzwerkmanagement einen entsprechenden Verbindungspfad, welcher die jeweiligen Datenlinks umfasst, zwischen den Netzknoten A und I im Netzwerk ein, wobei für jeden einzelnen Datenlink ein vom Übertragungskanal 1 verschiedener Übertragungskanal als Prioritätskanal eingerichtet wird. Dies erfolgt für jeden Datenlink in analoger Weise, wie bereits für die beiden Netzknoten A und D im Zusammenhang mit Fig. 2 beschrieben wurde. Um unnötige Wiederholungen zu vermeiden, wird auf die dort gemachten Ausführungen verwiesen.

Wie in Fig. 3 gezeigt ist, wird für eine Übertragung priorisierter Nutzdaten zwischen den Netzknoten A und E der Übertragungskanal 2, zwischen den Netzknoten E und F der Übertragungskanal 3, zwischen den Netzknoten F und G der Übertragungskanal 4, zwischen den Netzknoten G und H der Übertragungskanal 2, und zwischen den Netzknoten H und I der Übertragungskanal 3 als jeweiliger Prioritätskanal ausgewählt. Dies erfolgt beispielsweise auf Basis der momentan verfügbaren Bandbreite eines Übertragungskanals. Eine Signalisierung der Prioritätskanäle erfolgt durch Austausch von Steuersignalen über den Steuerkanal 1.

Nach Signalisieren der jeweiligen Prioritätskanäle senden die Netzknoten des Verbindungspfads an ihre jeweils in Funkreichweite befindlichen nächsten Nachbar-Netzknoten über den Steuerkanal entsprechende Steuersignale, um diese über die jeweils für eine Übertragung von priorisierten Nutzdaten reservierten Übertragungskanäle zu informieren. So sendet beispielsweise Netzknoten A an die beiden Netzknoten B und D jeweils ein solches Steuersignal, was zur Folge hat, dass zwischen den Netzknoten A und B der Übertragungskanal 6 fortan für eine Übertragung von nicht-priorisierten Nutzdaten gewählt wird.

Wie aus Fig. 3 ersichtlich ist, nutzt kein Nachbar-Netzknoten eines Netzknotens des die beiden Netzknoten A und I miteinander verbindenden Verbindungspfads für eine Übertragung von nicht-priorisierten Nutzdaten zwischen sich und einem Netzknoten des Verbindungspfads oder zwischen sich und einem anderen Nachbar-Netzknoten (eines Netzknotens des Verbindungspfads) einen Übertragungskanal der zur Übertragung von priorisierten Daten reserviert ist. Die Wahl eines neuen Übertragungskanals zur Übertragung nicht-priorisierter Nutzdaten kann beispielsweise auf Basis einer momentan verfügbaren Bandbreite der jeweils verfügbaren Übertragungskanäle erfolgen.

Zwischen den beiden Netzknoten A und I können nun im Multihop-Verfahren priorisierte Nutzdaten auf den als Prioritätskanäle reservierten Übertragungskanälen auf dem Verbindungspfad übertragen werden, so dass eine störungsfreie Übertragung priorisierter Nutzdaten zwischen den Netzknoten A und I sichergestellt werden kann.

Zudem ist im Multihop-Netzwerk ein Kollisionsvermeidungsprotokoll implementiert, durch das sichergestellt werden kann, dass nicht-priorisierter Datenverkehr kollisionsfrei übertragen wird. Die Verwendung eines solchen Kollisionsvermeidungsprotokolls macht die Zuweisung von Übertragungskanälen zur Übertragung nicht-priorisierter Nutzdaten sehr flexibel. Ohne ein solches Kollisionsvermeidungsprotokoll könnte bei der Übertragung von nicht-priorisierten Nutzdaten eine Datenkollision auftreten. Aber auch für die Übertragung von priorisierten Nutzdaten ist ein Kollisionsvermeidungsprotokoll für folgenden Fall nötig: Falls ein Netzknoten nicht-priorisierte Nutzdaten übermittelt und in einen Bereich eintritt, in dem priorisierter Datenverkehr abgewickelt wird und falls dieser zufälliger Weise eine Datenübertragung auf einem Prioritätskanal initiiert, kann dies von den Netzknoten, die den Prioritätskanal nutzen, erkannt werden und es wird ein anderer verfügbarer Übertragungskanal zur Übertragung nicht-priorisierter Nutzdaten ausgehandelt.

In dem erfindungsgemäßen Verfahren kann für die Datenübertragung ein (Teilungs-)Multiplexverfahren, beispielsweise FDMA (FDMA = Frequency Division Multiple Access) oder CDMA (CDMA = Code Division Multiple Access), auf wenigstens drei Übertragungskanälen eingesetzt werden. Durch ein Kollisionsvermeidungsprotokoll, beispielsweise CSMA/CA (CSMA/CA = Carrier Sense Multiple Access / CA = Collision Avoidance) das im Rahmen der durch die Standards IEEE 802.11 (WLAN) und IEEE 802.15.4 (Zigbee) eingeführten Technologien häufig eingesetzt wird, kann bei der Übertragung von nicht-priorisierten Nutzdaten eine Datenkollision vermieden werden. Ein jeweils gleicher Übertragungskanal wird ausschließlich für die Übertragung von Steuerdaten zum Zwecke des Signalisierens von für die Übertragung priorisierter oder nicht-priorisierter Nutzdaten eingesetzter Übertragungskanäle verwendet. Falls im Netzwerk nur nicht-priorisierte Daten übertragen werden, kann ein Netzknoten aus allen für die Nutzdatenübertragung verfügbaren Übertragungskanälen einen Kanal für die Datenübertragung auswählen, beispielsweise der Übertragungskanal, der momentan die größte Bandbreite für eine Datenübertragung bereitstellt. Falls priorisierte Daten (z. B. Echtzeitdaten) über das Netzwerk übertragen werden sollen, wird für den priorisierten Datenverkehr ein Verbindungspfad mit einem oder mehreren hierfür reservierten Übertragungskanälen eingerichtet. Hierbei werden alle in Nachbarschaft der Netzknoten des Verbindungspfads befindlichen Netzknoten über die jeweiligen Prioritätskanäle informiert. Eine Übertragung von nicht-priorisierten Nutzdaten wird dann auf anderen Übertragungskanälen abgewickelt, wobei ein Wettstreit um Bandbreite durch das eingerichtete Kollisionsvermeidungsprotokoll ermöglicht ist. Für den Fall, dass keine priorisierte Nutzdaten mehr über das Netzwerk übertragen werden müssen, können nicht-priorisierte Nutzdaten wieder auf den vormals reservierten Übertragungskanälen übertragen werden. Zudem besteht optional die Möglichkeit, dass der Zugriff auf Übertragungskanäle, die für eine Übertragung nicht-priorisierter Daten vorgesehen sind, über den Steuerkanal synchronisiert wird.

Das erfindungsgemäße Verfahren kann in einem rein drahtlosen Multihop-Netzwerk oder in einem drahtlos/drahtgebundenen (hybriden) Netzwerk eingesetzt werden. In dem letztgenannten Fall kann das erfindungsgemäße Verfahren in jedem drahtlosen Abschnitt des Netzwerks eingesetzt werden, wohingegen in den drahtgebundenen Abschnitten herkömmliche Methoden der Verkehrspriorisierung, Verkehrsmanagement und Bandbreitenreservierung eingesetzt werden können.

## Patentansprüche

1. Verfahren zur Übertragung von Daten in einem drahtlosen Multihop-Netzwerk mit einer Mehrzahl Netzknoten, zwischen denen Daten über wenigstens drei Übertragungskanäle übertragen werden können, bei welchem
- ein Übertragungskanal als Steuerkanal für eine Übertragung von Steuerdaten reserviert wird und Steuerdaten nur über den Steuerkanal übertragen werden;
- wenigstens ein vom Steuerkanal verschiedener Übertragungskanal als Prioritätskanal für eine Übertragung von priorisierten Nutzdaten zwischen Netzknoten eines Verbindungspfads reserviert werden kann und priorisierte Nutzdaten nur über den wenigstens einen Prioritätskanal übertragen werden;
- wenigstens ein vom Steuerkanal und vom wenigstens einen Prioritätskanal verschiedener Übertragungskanal als Nicht-Prioritätskanal für eine Übertragung von nicht-priorisierten Nutzdaten zwischen einem jedem Netzknoten des Verbindungspfads und zu diesem Netzknoten jeweils benachbarten Nachbar-Netzknoten, sowie zwischen den Nachbar-Netzknoten untereinander, reserviert werden kann und nicht-priorisierte Nutzdaten nur über den wenigstens einen Nicht-Prioritätskanal übertragen werden.

2. Verfahren nach Anspruch 1, bei welchem eine Übertragung von priorisierten Nutzdaten für verschiedene Paare einander benachbarter Netzknoten des Verbindungspfads über einen jeweils gleichen Übertragungskanal erfolgt.

3. Verfahren nach Anspruch 1, bei welchem eine Übertragung von priorisierten Nutzdaten für verschiedene Paare einander benachbarter Netzknoten des Verbindungspfads über voneinander verschiedene Übertragungskanäle erfolgt.

4. Verfahren nach einem der Ansprüche 1 bis 3, bei welchem der wenigstens eine Prioritätskanal und der wenigstens eine Nicht-Prioritätskanal gemäß einer festlegbaren Reihenfolge für die Übertragungskanäle aus den vom Steuerkanal verschiedenen Übertragungskanälen gewählt werden.

5. Verfahren nach einem der Ansprüche 1 bis 3, bei welchem der wenigstens eine Prioritätskanal und der wenigstens eine Nicht-Prioritätskanal gemäß einer Auswahlregel für Werte wenigstens einer messbaren Kenngröße für die Übertragungskanäle gewählt werden.

6. Verfahren nach einem der Ansprüche 1 bis 5, bei welchem ein Kollisionsvermeidungsprotokoll zur Vermeidung von Datenkollisionen auf allen Übertragungskanälen ausgeführt wird.

7. Netzknoten eines drahtlosen Multihop-Netzwerks, welcher mit einer Steuereinrichtung zur Steuerung der Datenübertragung ausgerüstet ist, in der ein Programmcode eingerichtet ist, welcher Steuerbefehle enthält, die die Steuereinrichtung zur Durchführung eines Verfahrens nach einem der Ansprüche 1 bis 6 veranlassen.

8. Maschinenlesbarer Programmcode für eine Steuereinrichtung eines Netzknotens zur Steuerung der Datenübertragung, welcher Steuerbefehle enthält, die die Steuereinrichtung zur Durchführung eines Verfahrens nach einem der Ansprüche 1 bis 6 veranlassen.

9. Speichermedium mit einem darauf gespeicherten maschinenlesbaren Programmcode gemäß Anspruch 8.

## Claims

1. Method for transmitting data in a wireless multihop network having a plurality of network nodes between which data can be transmitted over at least three transmission channels, wherein
- one transmission channel is reserved as a control channel for transmitting control data and control data is transmitted only over the control channel;
- at least one transmission channel that is different from the control channel can be reserved as a priority channel for transmitting prioritised payload data between network nodes of a connection path and prioritised payload data is transmitted only over the at least one priority channel;
- at least one transmission channel that is different from the control channel and from the at least one priority channel can be reserved as a non-priority channel for transmitting non-prioritised payload data between any network node of the connection path and neighbouring network nodes adjacent thereto in each case, as well as among the neighbouring network nodes themselves, and non-prioritised payload data is transmitted only over the at least one non-priority channel.

2. Method according to claim 1, wherein prioritised payload data for different pairs of neighbouring network nodes of the connection path is transmitted over the same transmission channel in each case.

3. Method according to claim 1, wherein prioritised payload data for different pairs of neighbouring network nodes of the connection path is transmitted over transmission channels that are different from one another.

4. Method according to one of claims 1 to 3, wherein the at least one priority channel and the at least one non-priority channel are selected from the transmission channels that are different from the control channel in accordance with a specifiable sequence for the transmission channels.

5. Method according to one of claims 1 to 3, wherein the at least one priority channel and the at least one non-priority channel are selected in accordance with a selection rule for values of at least one measurable characteristic variable for the transmission channels.

6. Method according to one of claims 1 to 5, wherein a collision avoidance protocol is implemented on all transmission channels in order to avoid data collisions.

7. Network node of a wireless multihop network, which network node is equipped with a control device for controlling the data transmission in which there is set up a program code containing control commands which prompt the control device to perform a method according to one of claims 1 to 6.

8. Machine-readable program code for a control device of a network node for controlling the data transmission, which machine-readable program code contains control commands which prompt the control device to perform a method according to one of claims 1 to 6.

9. Storage medium on which is stored a machine-readable program code according to claim 8.

## Revendications

1. Procédé de transmission de données dans un réseau sans fil à bonds multiples avec une pluralité de noeuds de réseau entre lesquels des données peuvent être transmises sur au moins trois canaux de transmission, dans lequel :
- un canal de transmission est réservé en tant que canal de commande pour une transmission de données de commande et des données de commande sont transmises uniquement sur le canal de commande ;
- au moins un canal de transmission différent du canal de commande peut être réservé en tant que canal de priorité pour une transmission de données utiles prioritaires entre des noeuds de réseau d'un chemin de liaison et des données utiles prioritaires sont transmises uniquement sur l'au moins un canal de priorité ;
- au moins un canal de transmission différent du canal de commande et de l'au moins un canal de priorité peut être réservé en tant que canal de non-priorité pour une transmission de données utiles non prioritaires entre tout noeud de réseau du chemin de liaison et des noeuds de réseau voisins respectivement voisins de ce noeud de réseau, ainsi qu'entre les noeuds de réseau voisins eux-mêmes, et des données utiles non prioritaires sont transmises uniquement sur l'au moins un canal de non-priorité.

2. Procédé selon la revendication 1, dans lequel une transmission de données utiles prioritaires s'effectue, pour différentes paires de noeuds de réseau du chemin de liaison voisins entre eux, sur un canal de transmission respectivement identique.

3. Procédé selon la revendication 1, dans lequel une transmission de données utiles prioritaires s'effectue, pour différentes paires de noeuds de réseau du chemin de liaison voisins entre eux, sur des canaux de transmission différents les uns des autres.

4. Procédé selon l'une des revendications 1 à 3, dans lequel l'au moins un canal de priorité et l'au moins un canal de non-priorité sont choisis dans un ordre déterminable pour les canaux de transmission parmi les canaux de transmission différents du canal de commande.

5. Procédé selon l'une des revendications 1 à 3, dans lequel l'au moins un canal de priorité et l'au moins un canal de non-priorité sont choisis selon une règle de sélection pour des valeurs d'au moins une grandeur caractéristique mesurable pour les canaux de transmission.

6. Procédé selon l'une des revendications 1 à 5, dans lequel un protocole d'évitement de collisions est exécuté pour éviter des collisions de données sur tous les canaux de transmission.

7. Noeud de réseau d'un réseau sans fil à bonds multiples, lequel noeud est équipé d'un dispositif de commande pour commander la transmission de données, dans lequel dispositif est aménagé un code de programme qui contient des ordres de commande qui font exécuter au dispositif de commande un procédé selon l'une des revendications 1 à 6.

8. Code de programme lisible par machine pour un dispositif de commande d'un noeud de réseau pour commander la transmission de données, lequel code contient des ordres de commande qui font exécuter au dispositif de commande un procédé selon l'une des revendications 1 à 6.

9. Support de mémoire avec un code de programme selon la revendication 8, lisible par machine et stocké dessus.
